# EUROPEAN PATENT APPLICATION

(11) **EP 4 327 648 A1**
(43) Date of publication of application: **28.02.2024**
(21) Application number: 23193349.0
(22) Date of filing: 25.08.2023
(51) Int. Cl.: A01G 3/025, A01G 3/033, B26B 17/02

(54) **TOOL WITH SELECTIVELY ENGAGABLE TOOL HEAD**

(30) Priority: 26.08.2022 US 202263401229 P
(71) Applicant: Techtronic Cordless GP, Anderson, SC 29621 (US)
(72) Inventor: AMICK, Ashley, Anderson, 29621 (US); OLVERA, Eduardo, Anderson, 29621 (US); SCHAAFSMA, Graham, Anderson, 29621 (US); FLEMING, Joel, Anderson, 29621 (US)
(74) Representative: Novagraaf Group

(57) **Abstract**

The invention concerns a tool (100), the tool (100) including a handle (180), a tool head (115), a first gear (134), a compound gear (150), a shaft (146), and an actuating member (170) coupled to the shaft (146). The handle (180) extends along a longitudinal direction. The tool head (115) is configured to receive a motive force to selectively engage or disengage the tool head (115). The first gear (134) is operably coupled to the tool head (115). The compound gear (150) is selectively coupled to the first gear (134). The shaft (146) extends through the compound gear (150) and is affixed to the shaft (146). The actuating member (170) is coupled to the handle (180). Movement of the actuating member (170) along the longitudinal direction selectively engages or disengages the compound gear (150) and the first gear (134).

## Description

### PRIORITTY STATEMENT

The present disclosure claims the benefit of priority to U.S. provisional patent application serial number 63/401,229, filed August 26, 2022, the disclosure of which is incorporated herein by reference in its entirety.

### FIELD

The present subject matter is directed generally to tools. Particular aspects of the present disclosure are directed to tools with shear assemblies, such as cutters and loppers.

### BACKGROUND

Tools, such as shears or loppers, are configured to cut members, such as branches, hedges, bushes, etc. Such members may be of various thicknesses, densities, or strengths, which may correspondingly require different amounts of force and repetitive motion to be exerted by the user. Furthermore, a user may require repetitive motion of a cutting member at a tool to cut multiple members.

### BRIEF DESCRIPTION

Aspects and advantages of the invention will be set forth in part in the following description, or may be obvious from the description, or may be learned through practice of the invention.

Aspects of the present disclosure are directed to a tool that can repetitively apply forces for cutting members. Still further aspects of the present disclosure are directed to a tool that can repeatedly apply forces for cutting members and rapidly reposition the tool for repetitively cutting members.

An aspect of the present disclosure is directed to a tool. The exemplary tool defines a mutually orthogonal longitudinal direction, transverse direction, and lateral direction. The exemplary tool includes a handle extending along the longitudinal direction. A head is configured to receive a motive force to selectively engage and disengage the tool head. A first gear is operably coupled to the tool head. A compound gear is selectively coupled to the first gear. A shaft extends through the compound gear. The compound gear is affixed to the shaft. An actuating member is coupled to the shaft. Movement of the actuating member along the longitudinal direction selectively engages or disengages the compound gear and the first gear.

Another aspect of the present disclosure is directed to an assembly. The exemplary assembly defines a mutually orthogonal longitudinal direction, transverse direction, and lateral direction. The exemplary assembly includes a tool head configured to receive a motive force to selectively engage and disengage the tool head. A first gear is operably coupled to the tool head. A compound gear is selectively coupled to the first gear. A plurality of gears is configured to transmit energy through the compound gear and the first gear to articulate the tool head. A shaft extends through the compound gear. The compound gear is affixed to the shaft. A handle extends along the longitudinal direction. The handle includes a handle grip configured to selectively articulate along the longitudinal direction. An actuating member is coupled to the shaft through a linkage and coupled to the handle grip. The handle grip is operably coupled to the linkage through the actuating member to form a first position at which the compound gear is operably meshed with the first gear. The handle grip is configured to articulate along the longitudinal direction to form a second position in which the actuating member translates the shaft and compound gear out of engagement with the first gear.

These and other exemplary features, aspects and advantages of the present invention will become better understood with reference to the following description and appended claims. The accompanying drawings, which are incorporated in and constitute a part of this specification, illustrate embodiments of the invention and, together with the description, serve to explain exemplary principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
Fig. 1 depicts a perspective view of an exemplary embodiment of a tool engaged with a member in accordance with aspects of the present disclosure;
Fig. 2 depicts an elevated side view of an exemplary embodiment of the tool of Fig. 1;
Fig. 3 depicts a perspective internal view of an exemplary embodiment of a gear housing of the tool in accordance with aspects of the present disclosure;
Fig. 4 depicts a perspective view of a portion of an exemplary embodiment the tool in accordance with aspects of the present disclosure;
Fig. 5 depicts a perspective view of a portion of an exemplary embodiment the tool in accordance with aspects of the present disclosure;
Fig. 6 depicts a perspective cutaway view of a portion of an exemplary embodiment of the tool in accordance with aspects of the present disclosure;
Fig. 7 depicts a perspective view of an exemplary embodiment of the tool in accordance with aspects of the present disclosure; and
Fig. 8 depicts a flowchart outlining exemplary steps of a method for operating a tool in accordance with aspects of the present disclosure.

Repeat use of reference characters in the present specification and drawings is intended to represent the same or analogous features or elements of the present invention.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

As used herein, the terms "first", "second", and "third" may be used interchangeably to distinguish one component from another and are not intended to signify location or importance of the individual components.

Embodiments of a tool are provided herein that may advantageously control tool head engagement and disengagement. Various embodiments provided herein may allow a user to selectively engage and disengage a tool head without requiring electronic control mechanisms. Manual selective engagement and disengagement may mitigate risks associated with electronic control mechanisms, reduce complexity and weight, and avoid operability issues associated with control mechanism malfunction. Embodiments of the tool provided herein may form a cutting tool, shear, lopper, pruner, or grip. The tool may include an extended handle or boom allowing a user to place the tool head at greater distances from the user. The tool includes a mechanical release mechanism that allows the user to disengage the tool head, such as blades or shears, after performing a cut or shear. The mechanical release mechanism may allow the user to disengage the tool head by applying a force at the handle, such as by pulling a grip section at the handle. The handle or grip section is operably coupled to a cable, wire, or other actuating member coupled to a linkage operably coupled to the tool head. The linkage acts on a shaft or fastener that applies a force, such as to pull a plurality of gears out of engagement. A spring may push the gears into engagement, such as when the user relaxes or releases force applied at the handle. Embodiments of the tool may allow for any gas, electric, or other power unit to operably couple to selectively actuate the tool head and allow the user to manually disengage or reset the tool head to perform further cutting or shearing motions.

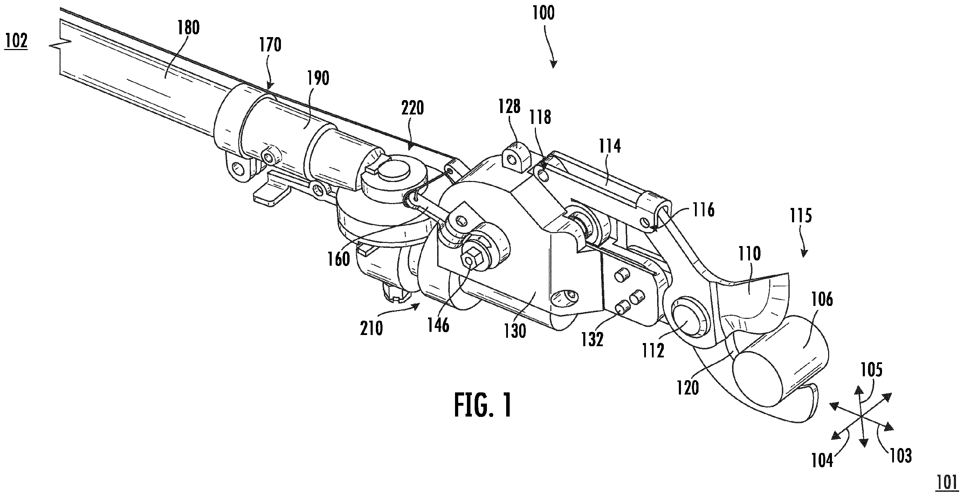

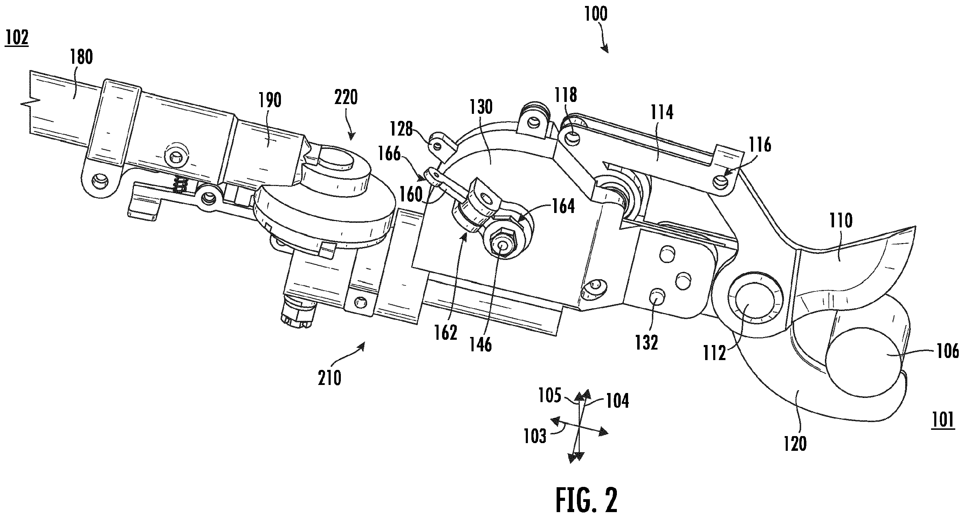

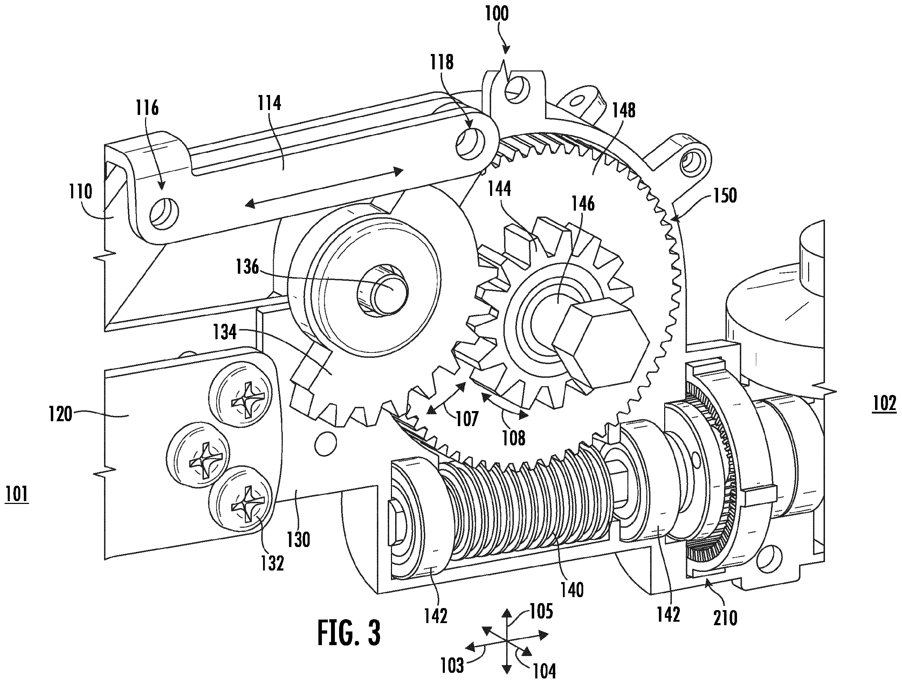

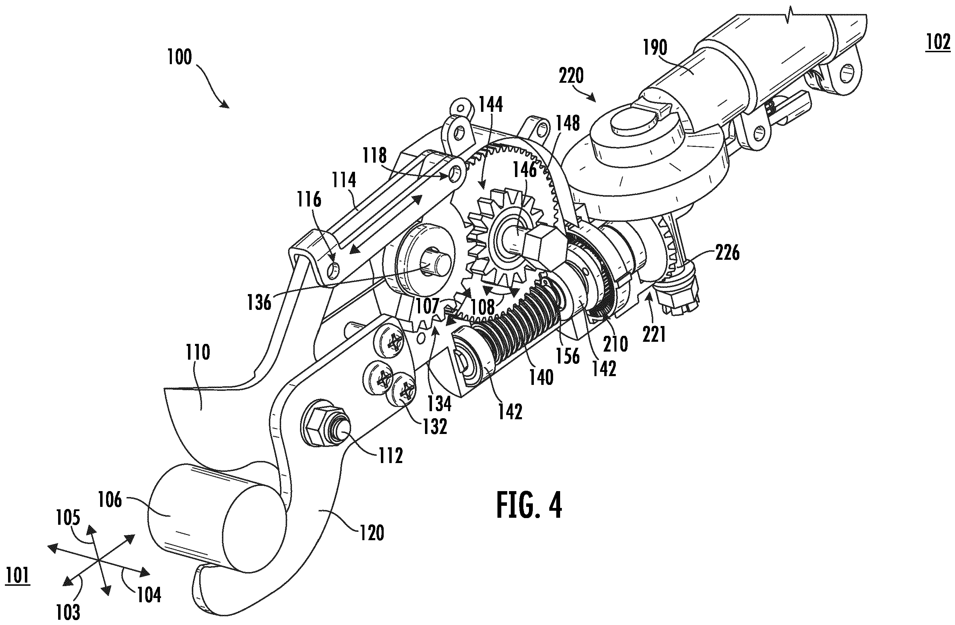

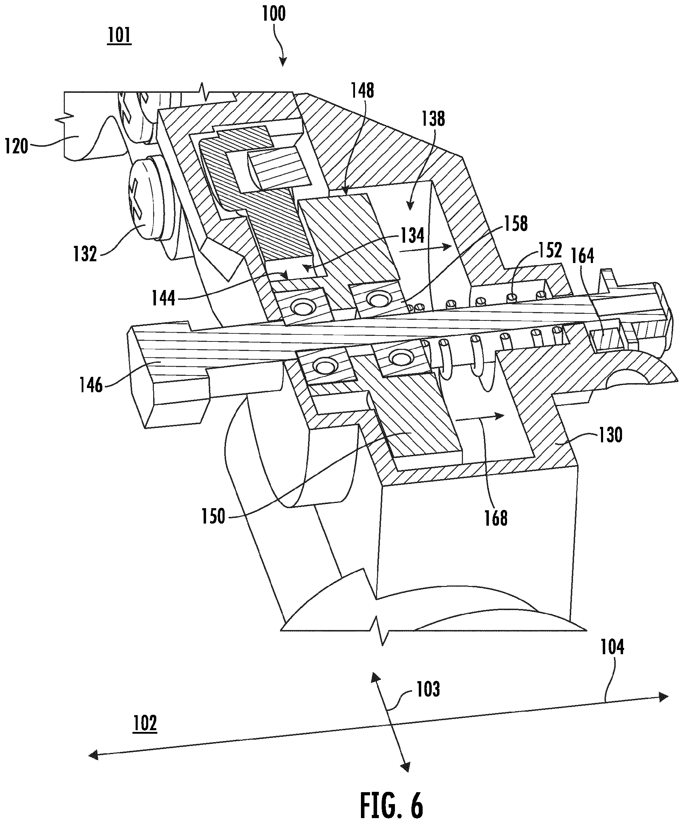

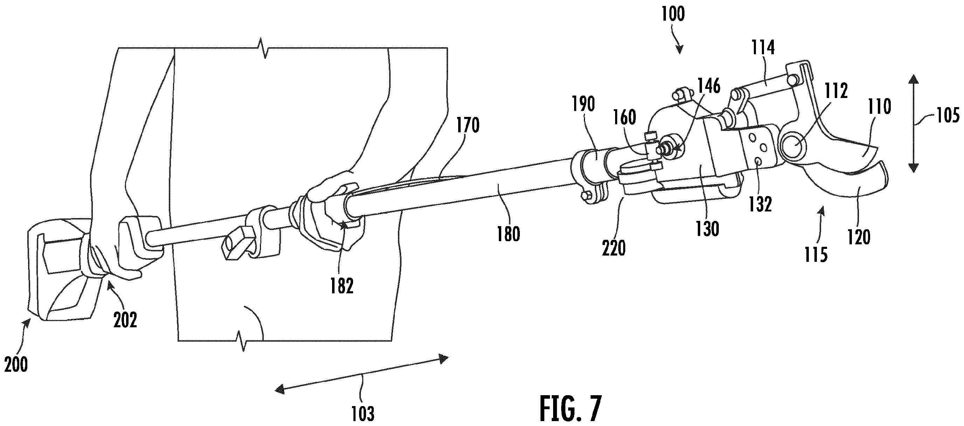

Referring to Figs. 1-7, exemplary embodiments of a tool 100 are provided. Figs. 1-2 depict exemplary perspective views of the tool 100. Figs. 3-5 depict internal views of the tool 100 in which certain components are omitted for clarity and internal view. Fig. 6 depicts a cutaway perspective view of an embodiment of the tool 100. Fig. 7 depicts a perspective view of an embodiment of the tool 100 including a power unit 200. A reference longitudinal direction 103 extends co-directional to an extension of the tool 100 between a first end 101 and a second end 102. First end 101 forms a tool end at which a tool head 115 is positioned. Tool head 115 is configured to receive motive energy to selectively engage and disengage the tool head 115. In certain embodiments, tool head 115 includes a first tool member 110 and a second tool member 120. In various embodiments, tool members 110, 120 form cutting members configured to contact and interact (e.g., cut, shear, lop, etc.) with a contact member 106 (e.g., tree branches, limbs, or other surfaces to be cut, sheared, deformed, etc.). Second end 102 forms a handling end at which a user may hold and operate the tool 100. Lateral direction 105 forms a direction substantially along which tool member 110, 120 move toward one another to engage and disengage with member 106. Lateral direction 105 may particularly include a direction along which members 110, 120 are converged toward one another such as to provide a shearing, cutting, lopping, gripping, etc. action of engagement, and a direction opposite of which providing an action of disengagement of members 110, 120 from one another. Transverse direction 104 is formed orthogonal to lateral direction 105 and longitudinal direction 103.

A pivot member 112 extends at least partially through the tool member 110, 120 to provide a pivoting relationship between the first tool member 110 and the second tool member 120. Second tool member 120 may be fixedly attached to a gear housing 130. For example, a fastener 132 may extend at least partially through second tool member 120 and housing 130 to affix second tool member 120 to housing 130. In some embodiments, fastener 132 extends along the transverse direction 104 at least partially through second tool member 120 and housing 130.

As further described herein, force and movement along longitudinal direction 103 from a user allows for engagement and disengagement of the tool member 110, 120 to and from one another. In various embodiments, a connection member 114 coupled to first member 110 translates along longitudinal direction 103 and allows for first member 110 to rotate at pivot member 112 toward second member 120. In some embodiments, a fastener 116 extends along transverse direction 104 to couple together the first member 110 and connection member 114.

Referring particularly to internal views provided in Figs. 3-5, a first gear 134 is operably coupled to connection member 114 to allow rotation of first gear 134. In certain embodiments, a fastener 118 extends along transverse direction 104 to couple together the first gear 134 and connection member 114 (e.g., about a flange portion of first gear 134). Accordingly, fastener 116 and fastener 118 are separated from one another through connection member 114 along longitudinal direction 103. In various embodiments, connection member 114 may form a rail or pair of rails through which fastener 116, 118 may extend. First gear 134 and first member 110 may each extend into the pair of rails formed at connection member 114. However, it should be appreciated that connection member 114 may form any appropriate connection interface to first member 110 and first gear 134.

In some embodiments, a shaft 136 extends along the transverse direction 104 through first gear 134 to allow rotation along an axis formed at shaft 136. Accordingly, first gear 134 may rotate along a circumferential direction 107 relative to shaft 136.

Referring still to Figs. 3-6, a second gear 144 is selectively positioned in a gear meshing arrangement with first gear 134. A shaft 146 extends along the transverse direction 104 through second gear 144 to allow rotation along an axis formed at shaft 146. Accordingly, second gear 144 may rotate along a circumferential direction 108 relative to shaft 146.

A third gear 148 is selectively positioned in a gear meshing arrangement with a fourth gear 140. In various embodiments, second gear 144 and third gear 148 together form a unitary component or an integral assembly of separate components. In some embodiments, second gear 144 and third gear 148 together form a compound gear 150. The compound gear 150, including the second gear 144 and third gear 148, is rotatable relative to an axis formed by shaft 146. In some embodiments, third gear 148 forms a radius greater than the second gear 144. In some embodiments, first gear 134 forms an output gear configured to receive energy from operable coupling with the compound gear at the second gear 144. As such, energy received at third gear 148 induces rotation of second gear 144 along circumferential direction 108. Mechanical interfacing of second gear 144 and first gear 134 transfers motive energy to induce rotation of first gear 134 along circumferential direction 107. Rotation of first gear 134 translates connection member 114 along the longitudinal direction 103. Linkage of connection member 114 to first tool member 110 at fastener 116 allows for rotation of first tool member 110 at pivot member 112. Rotation of first tool member 110 toward second tool member 120 allows for cutting, shearing, lopping, or other interaction between the tool member 110, 120, such as depicted with regard to member 106.

In some embodiments, fourth gear 140 and third gear 148 together form a worm drive gear arrangement. In some embodiments, fourth gear 140 forms a worm screw configured to mesh with the third gear 148 forming a worm gear or other appropriate input gear for receiving energy from the fourth gear 140. A shaft 156 extends along the longitudinal direction 103. Fourth gear 140 extends in helical arrangement along the longitudinal direction 103 around the shaft 156. In various embodiments, inserts, washers, bushings, or spacers 142 are positioned at shaft 156, such as to desirably position fourth gear 140 at shaft 156 relative to third gear 148.

In an exemplary embodiment, tool 100 includes the first gear 134 and the second gear 144 in a gear mesh arrangement at which gear teeth from the respective gears interface along the longitudinal direction 103. Second gear 144 and third gear 148 are positioned in adjacent arrangement along the transverse direction 104. Accordingly, third gear 148 is offset along the transverse direction 104 from first gear 134. Fourth gear 140 and third gear 148 are in a gear mesh arrangement and are positioned adjacent to one another along the lateral direction 105.

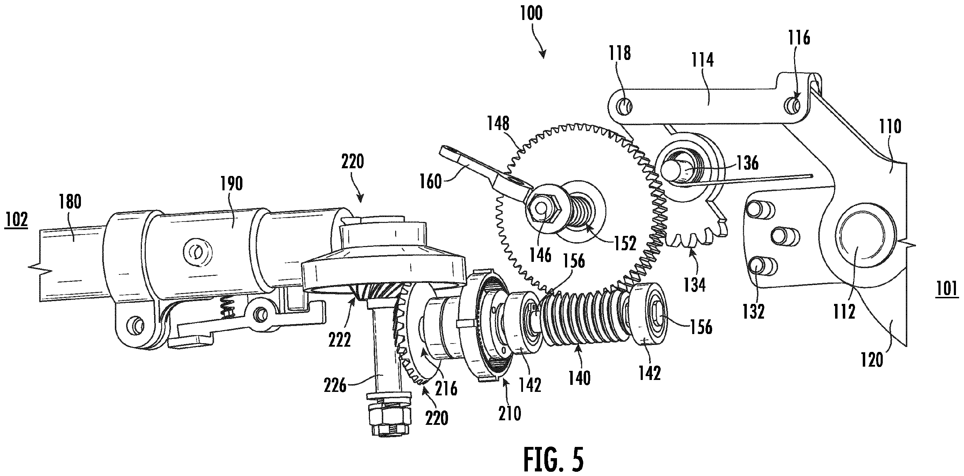

Referring now to Figs. 5-6, a spring 152 is positioned at shaft 146. Referring particularly to the cutaway perspective view provided in Fig. 6, spring 152 is positioned within a cavity 138 formed within housing 130. In some embodiments, spring 152 is extended and compressed along the transverse direction 104. Spring 152 is positioned to react against the compound gear 150 and housing 130. In some embodiments, inserts 158 are positioned at shaft 146 and affix to compound gear 150. In a particular embodiment, spring 152 may react against insert 158. However, it should be appreciated that various embodiments may include spring 152 reacting directly against compound gear 150. In some embodiments, shaft 146 may couple directly to compound gear 150.

Referring back to Figs. 1-2, a linkage 160 is operably coupled to shaft 146 to selectively translate shaft 146 along transverse direction 104. In a particular embodiment, linkage 160 is operably coupled to an actuating member 170 extending substantially along the longitudinal direction 103. The actuating member 170 is configured to receive a force toward the second end 102 and actuate, translate, or otherwise move the linkage 160. Linkage 160 may be pivotally coupled to housing 130, such as at connection interface 162. A mechanical fastener, such as a pin, rod, or shaft, is extendable into connection interface 162 to couple linkage 160 to housing 130. In some embodiments, connection interface 162 translates force received at a second linkage 166 along the longitudinal direction 103 from actuating member 170 to force along transverse direction 104 received at shaft 146. For example, linkage 160 may be coupled at a first end 164 to shaft 146.

In an exemplary embodiment of operation of the tool 100, a user may pull actuating member 170 to generate a force along longitudinal direction 103 toward the second end 102. Actuating member 170 may form a wire, a sheathed or sleeved wire, a flexible member, a sheathed or sleeved cable, or other appropriate member configured to transmit force and pull the linkage 160 at the second end 166 (e.g., such member may connect at second linkage 166). Linkage 160 translates the force received along the longitudinal direction 103 to force along the transverse direction 104. Referring to Fig. 6, force transmitted from actuating member 170 to shaft 146 allows compound gear 150 to translate along the transverse direction 104, such as depicted at arrows 168. In some embodiments, spring 152 is configured to push the compound gear 150 along the transverse direction 104 into gear meshing arrangement with the first gear 134. A user may pull actuating member 170 to overcome the force from spring 152 to allow compound gear 150 to disengage from first gear 134 by translating compound gear 150 along the transverse direction 104 along direction 168. Furthermore, in some embodiments housing 130 forms cavity 138 extending along transverse direction 104 to allow for translation of compound gear 150 and disengagement from first gear 134.

Referring now to Figs. 1-5, tool 100 includes a handle 180 extending along the longitudinal direction 103 at which a user may hold, grip, and operate tool 100. In some embodiments, tool 100 may include a first gear assembly 210 operably coupled to transfer energy to the fourth gear 140. Referring particularly to Fig. 5, the first gear assembly 210 may include a plurality of gears configured to transfer energy to rotate shaft 156 at which fourth gear 140 is coupled. In some embodiments, first gear assembly 210 forms a planetary gear assembly or epicyclic gear assembly. The first gear assembly 210 may include a ring gear surrounding one or more planet gears. Various embodiments of tool 100 may include other embodiments of gear assembly to transmit energy to shaft 156, fourth gear 140, and compound gear 150.

Referring still to Fig. 5, a shaft 216 may extend between first gear assembly 210 and a second gear assembly 220. Shaft 216 is configured to transmit energy from the second gear assembly 220 to the first gear assembly 210. First gear assembly 210 may form a torque converter configured to transmit energy and torque to rotate shaft 156 and energy through fourth gear 140 to compound gear 150 and first gear 134. In some embodiments, a receiving gear 221 is configured to operably mesh with a transmitting gear 222. A shaft 226 may extend along the lateral direction 105 or generally orthogonal to longitudinal direction 104. Receiving gear 221 and transmitting gear 222 may together form a bevel gear arrangement, a spur gear arrangement, or other appropriate type of arrangement. In some embodiments, gears 221, 222 may be positioned approximately 90 degrees from one another. For instance, transmitting gear 222 may be operably coupled to shaft 226. Receiving gear 221 may be operably coupled to shaft 216. Shafts 216, 226 may be positioned in substantially perpendicular arrangement or in oblique arrangement. Gears 221, 222 may accordingly be positioned and meshed to one another in perpendicular or oblique arrangement.

Referring to Figs. 1-5, tool 100 may include a handle attachment housing 190 configured to affix to handle 180. Housing 190 may surround at least a portion of handle 180 at an end proximate to first end 101 or distal to second end 102. Attachment housing 190 may form an interface between handle 180 and gear housing 130. Housing 190 may surround at least a portion of second gear assembly 220, such as transmitting gear 222. Shaft 226 may extend at least partially through housing 190. Accordingly, housing 190 may provide operable support to shaft 226 and allow for rotation and power transmission from transmitting gear 222 to receiving gear 221.

In certain embodiments, tool 100 may include a battery, capacitor, gas power unit, or other gas or electric power unit operably coupled to second gear assembly 220. The power unit may be positioned at or toward the second end 102, such as proximate to a user holding the handle 180.

Housing 130 may form recesses, grooves, or other interfaces configured to retain shaft 136, 146, 156 within housing 130. In certain embodiments, housing 130 may form separable halves that may couple together to retain shaft 136, 146, 156, 216, 226, first gear 134, second gear 144, third gear 148, fourth gear 140, and/or first gear assembly 210. Shaft 136, 146, 156, 216, 226 may include a mechanical fastener, such as, but not limited to, a bolt, a tie rod, a screw, or a shank of a mechanical fastener, or pin, rod, or other appropriate member at which an axis of rotation may be formed. In various embodiments, housing 130 may furthermore contain shaft 216, 226 and at least a portion of second gear assembly 220. In various embodiments, housing 130 is separable along the longitudinal direction 103. One or more fastener interfaces 128 may extend from two or more portions or halves of the housing 130 to allow for selective assembly and disassembly of housing 130. For instance, fastener interface 128 may allow a fastener to extend along the transverse direction 104 to bind two or more portions of housing 130 together.

Various embodiments of the tool 100 may form an extended handle 180 and tool head, such as a shear tool or lopper, at tool member 110, 120. Some embodiments of tool 100 include a release mechanism formed at shaft 146, spring 152, and compound gear 150, allowing a user to open or disengage the tool member 110, 120 from one another after completing a cut by pulling on handle 180 (e.g., toward second end 102). An actuating member 170 is operably coupled to handle 180 or other user hand interface. Actuating member 170 may form a sleeved cable or wire allowing a user to pull linkage 160. Linkage 160 may form a lever that acts on shaft 146 extending along the transverse direction 104 through gears 144, 148. Pulling actuating member 170 articulates linkage 160, such as to pivot at connection interface 162 and articulate shaft 146 along the transverse direction 104. Gears 144, 148 affixed to shaft 146 are accordingly translated along transverse direction 104, such as to selectively disengage gears 144, 148 from first gear 134. Spring 152 is biased to push gears 144, 148 back into engagement with first gear 134, such as when the user relaxes the grip section at handle 180. Embodiments of tool 100 may include mechanical or electrical power units configured to provide power through gear assemblies 210, 220 to articulate gears 134, 144. Embodiments provided herein may particularly allow for any desired power unit to articulate tool member 110, 120 by allowing the user to selectively manually control engagement of tool member 110, 120 to one another in contrast to electronic control systems.

Referring now to Fig. 7, a perspective view of an exemplary embodiment of a tool assembly including embodiments of tool 100 is provided. Fig. 7 depicts an embodiment including a power unit 200 operably coupled to handle 180. Power unit 200 may form an electric power unit, such as a cordless battery or capacitor device, a corded electrical power device, or a gas-powered motor. Power unit 200 may be configured to transmit energy through handle 180 to gear assemblies 210, 220. Power unit 200 may generally include a unitary or separable housing at which a grip or user interface 202 is formed.

Handle 180 may include a handle grip 182. In some embodiments, handle grip 182 is configured to move or articulate substantially along longitudinal direction 103. For instance, a user may pull handle grip 182 along longitudinal direction 103 toward power unit 200. Handle grip 182 is mechanically coupled to actuating member 170, such as a sleeved cable or wire. As provided herein, actuating member 170 is attached to linkage 160 such that movement of handle grip 182 along longitudinal direction 103 causes actuating member 170 to articulate linkage 160. Pulling actuating member 170 toward power unit 200 articulates linkage 160, such as to pivot at connection interface 162 and articulate shaft 146 along the transverse direction 104. Gears 144, 148 affixed to shaft 146 are accordingly translated along transverse direction 104, such as to selectively disengage gears 144, 148, or compound gear 150 generally, from first gear 134. Spring 152 is biased to push gears 144, 148 back into engagement with first gear 134, such as when the user relaxes the handle grip 182 at handle 180.

In some embodiments, handle grip 182 at handle 180 is operably coupled to linkage 160 through actuating member 170 to form a first position at which second gear 144 is operably meshed with first gear 134. Operation of power unit 200 may transmit energy through gear assemblies 210, 220 and through gears 140, 150, 134 to articulate a tool head 115, such as to engage or close members 110, 120 to one another as described herein. A user may pull or otherwise articulate handle grip 182 along the longitudinal direction 103 to form a second position at which compound gear 150 is disengaged from first gear 134 such as described herein. In some embodiments, articulation of handle grip 182 along the longitudinal direction 103 allows for translation of second gear 144 to disengage from first gear 134. Disengagement of the compound gear 150 from the first gear 134 and tool head 115 may allow for re-positioning of the tool head 115 to an open position, such as to disengage or open members 110, 120 from one another as described herein.

It should be appreciated that embodiments of tool 100 provided herein may form the tool head 115 including members 110, 120 as shearing, cutting, lopper, or other appropriate cutting tool members. In some embodiments, members 110, 120 may form gripping tool or other compound gripping motion (e.g., pliers) interfaces. Accordingly, in certain embodiments, first tool member 110 and second tool member 120 may be referred to as first attachment member 110 and second attachment member 120, or first gripping member 110 and second gripping member 120, or first cutting member 110 and second cutting member 120.

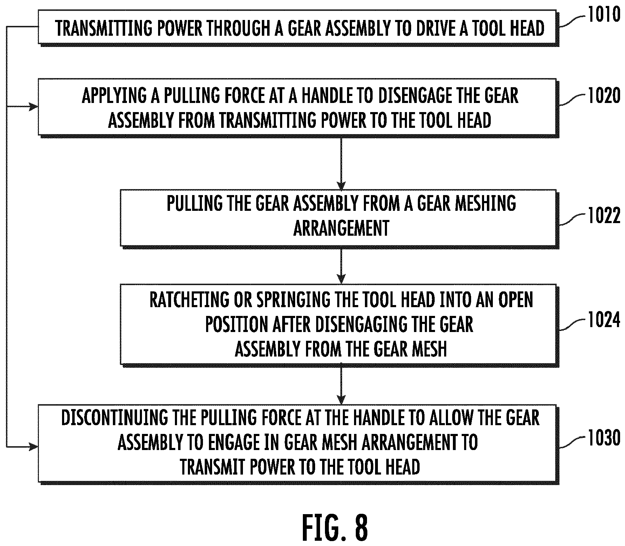

Referring now to Fig. 8, a flowchart outlining exemplary steps of a method for operating a tool (hereinafter, "method 1000") is provided. Embodiments of method 1000 may be utilized with embodiments of the tool 100 such as provided herein. However, it should be appreciated that embodiments of the method 1000 may be utilized with other apparatuses or configurations of a tool including a selectively engageable tool head.,

In various embodiments, method 1000 includes at 1010 transmitting power through a gear assembly (e.g., compound gear 150, gear 134) to drive a tool head (e.g., tool member 110, 120) to a closed position. Driving the tool head to the closed position may include articulating tool members to shear, lop, cut, clamp, or exert other forces onto a member positioned between the tool members (e.g., tool member 110, 120). In some embodiments, transmitting power includes transmitting power from a battery, capacitor, or gas or electric motor, or other electric or gas power source or motor. Transmitting power may include a user action, such as pushing a button, flipping a switch, or interfacing with another control surface. In still various embodiments, transmitting power may include a hand-operated user interface, such as a manually driven actuator, pulley, or other appropriate mechanical interface.

Method 1000 may include at 1020 applying a pulling force at a handle (e.g., handle 180) to disengage the gear assembly from transmitting power to the tool head. For instance, referring to Fig. 7, a user may pull a sleeved cable or wire (e.g., actuating member 170) operably coupled to the gear assembly. An exemplary embodiment of the sleeved cable or wire is connected to the handle at a first end and to the gear assembly at a second end. The pulling force may allow a portion of the gear assembly to disengage from gear mesh arrangement and decouple the gear assembly from the tool head.

In some embodiments, method 1000 includes at 1030 discontinuing the pulling force at the handle to allow the gear assembly to engage in gear mesh arrangement to transmit power to the tool head.

In some embodiments, method 1000 at 1022 pulling the gear assembly from a gear meshing arrangement. For instance, referring to Fig. 6, pulling the gear assembly may include disengaging the compound gear 150 from the first gear 134. In various embodiments, applying the pulling force at the handle pulls the gear assembly from the gear meshing arrangement to decouple transmission of power through the gear assembly to the tool head.

In still some embodiments, disengaging the gear assembly from gear meshing arrangement allows the tool head to articulate to an open position. In still various embodiments, method 1000 may include at 1024 ratcheting or springing the tool head into an open position after disengaging the gear assembly from the gear mesh. For instance, referring to Fig. 6, discontinuing the pulling force at the handle allows a springing force (e.g., from spring 152 reacting against compound gear 150 and housing 130) to push the gear assembly into gear meshing arrangement and allow for power transmission through the gear assembly to the tool head.

Further aspects of the invention are provided by one or more of the following clauses:
1. A tool, the tool defining a mutually orthogonal longitudinal direction, transverse direction, and lateral direction, the tool including a handle extending along the longitudinal direction; a tool head configured to receive a motive force to selectively engage and disengage the tool head; a first gear operably coupled to the tool head; a compound gear selectively coupled to the first gear; a shaft extending through the compound gear, the compound gear affixed to the shaft; and an actuating member coupled to the shaft, wherein movement of the actuating member along the longitudinal direction selectively engages or disengages the compound gear and the first gear.
2. The tool of any one or more clauses herein, further including a linkage coupled to the actuating member, wherein the linkage is configured to translate movement of the actuating member along the longitudinal direction to movement of the shaft along the transverse direction, and wherein movement of the shaft along the transverse direction selectively engages and disengages the compound gear and the first gear.
3. The tool of any one or more clauses herein, wherein the shaft is extending along the transverse direction through the compound gear.
4. The tool of any one or more clauses herein, the tool including a housing at which the first gear, the compound gear, and the shaft are positioned, wherein the housing forms a cavity at which the compound gear is allowed to translate to disengage from the first gear.
5. The tool of any one or more clauses herein, wherein the housing forms the cavity extending along the transverse direction, wherein the cavity extending along the transverse direction allows the compound gear to selectively articulate along the transverse direction to disengage from the first gear.
6. The tool of any one or more clauses herein, the tool including a spring positioned at the shaft within the housing, the spring extending along the transverse direction and positioned to react against the compound gear and the housing.
7. The tool of any one or more clauses herein, wherein the spring is biased to push the compound gear into engagement with the first gear.
8. The tool of any one or more clauses herein, further including a linkage coupled to the actuating member, wherein the linkage is pivotally coupled to the housing to translate movement of the actuating member along the longitudinal direction to movement of the shaft along the transverse direction.
9. The tool of any one or more clauses herein, the handle including a handle grip configured to selectively articulate along the longitudinal direction.
10. The tool of any one or more clauses herein, further including a linkage coupled to the actuating member, wherein the actuating member is connected to the handle grip, and wherein articulation of the handle grip along the longitudinal direction articulates the linkage through mechanical coupling to the actuating member.
11. The tool of any one or more clauses herein, the compound gear including a second gear selectively engaged to the first gear; and a third gear selectively engaged to a plurality of gears, the plurality of gears configured to transmit energy through the compound gear and the first gear to articulate the tool head.
12. The tool of any one or more clauses herein, wherein the first gear and the second gear are selectively positioned in a gear mesh arrangement along the longitudinal direction.
13. The tool of any one or more clauses herein, wherein the second gear and the third gear are positioned in adjacent arrangement along the transverse direction.
14. The tool of any one or more clauses herein, the tool including a fourth gear, wherein the third gear and the fourth gear form a worm drive gear arrangement.
15. The tool of any one or more clauses herein, the tool including a power unit configured to transmit energy through to generate the motive force to selectively engage and disengage the tool head, the power unit including an electric power unit or a gas power unit.
16. The tool of any one or more clauses herein, wherein the power unit is operable to transmit energy to generate motive force to selectively engage the tool head, and the actuating member is operable to move along the longitudinal direction to selectively disengage the tool head by disengaging the compound gear and the first gear.
17. A tool assembly, the tool assembly defining a mutually orthogonal longitudinal direction, transverse direction, and lateral direction, the tool assembly including a tool head configured to receive a motive force to selectively engage and disengage the tool head; a first gear operably coupled to the tool head; a compound gear selectively coupled to the first gear; a shaft extending through the compound gear, the compound gear affixed to the shaft; a handle extending along the longitudinal direction, the handle including a handle grip configured to selectively articulate along the longitudinal direction; and an actuating member coupled to the shaft through a linkage and coupled to the handle grip, wherein the handle grip is operably coupled to the linkage through the actuating member to form a first position at which the compound gear is operably meshed with the first gear, and wherein the handle grip is configured to articulate along the longitudinal direction to form a second position in which the actuating member translates the shaft and compound gear out of engagement with the first gear.
18. The tool assembly of any one or more clauses herein, the tool assembly including a housing at which the first gear, the compound gear, and the shaft are positioned, wherein the linkage is pivotally coupled to the housing to translate movement of the handle grip along the longitudinal direction from the first position to the second position to movement of the compound gear along the transverse direction from engagement to disengagement from the first gear.
19. The tool assembly of any one or more clauses herein, the tool assembly including a spring positioned at the shaft within a housing, the spring extending along the transverse direction and positioned to react against the compound gear and the housing, wherein the spring is biased to push the compound gear into engagement with the first gear, and wherein articulation of the shaft along the transverse direction compresses the spring and allows the compound gear to disengage the first gear.
20. The tool assembly of any one or more clauses herein, the tool assembly including a plurality of gears configured to transmit energy through the compound gear and the first gear to articulate the tool head; and a power unit configured to transmit energy through the plurality of gears to generate the motive force to selectively engage the tool head, wherein the handle grip in the first position engages the compound gear to the first gear and the plurality of gears to allow the power unit to transmit energy through the plurality of gears to the tool head, and wherein the handle grip in the second position disengages the compound gear from the first gear and the plurality of gears to disengage the tool head.
21. The tool assembly of any one or more clauses herein, including the tool of any one or more clauses herein.
22. The tool of any one or more clauses herein, including the tool assembly of any one or more clauses herein.
23. A shear tool, the shear tool including the tool of any one or more clauses herein.
24. A cutting tool, the cutting tool including the tool of any one or more clauses herein.
25. A gripping tool, the gripping tool including the tool of any one or more clauses herein.
26. A hand tool, the hand tool including the tool of any one or more clauses herein.
27. A method for operating a tool, the method including transmitting power through a gear assembly to drive a tool head; applying a pulling force at a handle to disengage the gear assembly from transmitting power to the tool head; and discontinuing the pulling force at the handle to allow the gear assembly to engage in gear mesh arrangement to transmit power to the tool head.
28. The method of any one or more clauses herein, the method including pulling the gear assembly from a gear meshing arrangement.
29. The method of any one or more clauses herein, the method including ratcheting the tool head into an open position after disengaging the gear assembly from the gear mesh.
30. The method of any one or more clauses herein, the method including springing the tool head into an open position after disengaging the gear assembly from the gear mesh.
31. A tool configured to perform the method of any one or more clauses herein.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A tool (100), the tool (100) defining a mutually orthogonal longitudinal direction, transverse direction, and lateral direction, the tool (100) comprising:
a handle (180) extending along the longitudinal direction;
a tool head configured to receive a motive force to selectively engage or disengage the tool head (115);
a first gear (134) operably coupled to the tool head (115);
a compound gear (150) selectively coupled to the first gear (134);
a shaft (146) extending through the compound gear (150), the compound gear (150) affixed to the shaft (146); and
an actuating member (170) coupled to the shaft (146), wherein movement of the actuating member (170) along the longitudinal direction selectively engages or disengages the compound gear (150) and the first gear (134).

2. The tool (100) of claim 1, further comprising a linkage (160) coupled to the actuating member (170), wherein the linkage (160) is configured to translate movement of the actuating member (170) along the longitudinal direction to movement of the shaft (146) along the transverse direction, and wherein movement of the shaft (146) along the transverse direction selectively engages or disengages the compound gear (150) and the first gear (134).

3. The tool (100) of claim 1, wherein the shaft (146) is extending along the transverse direction through the compound gear (150).

4. The tool (100) of claim 1, the tool (100) comprising:
a housing (130) at which the first gear (134), the compound gear (150), and the shaft (146) are positioned, wherein the housing (130) forms a cavity (138) at which the compound gear (150) is allowed to translate to disengage from the first gear (134).

5. The tool (100) of claim 4, wherein the housing (130) forms the cavity (138) extending along the transverse direction, wherein the cavity (138) extending along the transverse direction allows the compound gear (150) to selectively articulate along the transverse direction to disengage from the first gear (134).

6. The tool (100) of claim 4, the tool (100) comprising:
a spring (152) positioned at the shaft (146) within the housing (130), the spring (152) extending along the transverse direction and positioned to react against the compound gear (150) and the housing (130).

7. The tool (100) of claim 6, wherein the spring (152) is biased to push the compound gear (150) into engagement with the first gear (134).

8. The tool (100) of claim 4, further comprising a linkage (160) coupled to the actuating member (170), wherein the linkage (160) is pivotally coupled to the housing (130) to translate movement of the actuating member (170) along the longitudinal direction to movement of the shaft (146) along the transverse direction.

9. The tool (100) of claim 1, the handle (180) comprising a handle grip (182) configured to selectively articulate along the longitudinal direction.

10. The tool (100) of claim 9, further comprising a linkage (160) coupled to the actuating member (170), wherein the actuating member (170) is also connected to the handle grip (182), and wherein articulation of the handle grip (182) along the longitudinal direction articulates the linkage (160) through mechanical coupling to the actuating member (170).

11. The tool (100) of claim 1, the compound gear (150) comprising:
a second gear (144) selectively engaged to the first gear (134); and
a third gear (148) selectively engaged to a plurality of gears, the plurality of gears configured to transmit energy through the compound gear (150) and the first gear (134) to articulate the tool head (115).

12. The tool (100) of claim 11, wherein the first gear (134) and the second gear (144) are selectively positioned in a gear mesh arrangement along the longitudinal direction.

13. The tool (100) of claim 12, wherein the second gear (144) and the third gear (148) are positioned in adjacent arrangement along the transverse direction.

14. The tool (100) of claim 11, the tool (100) comprising:
a fourth gear (140), wherein the third gear (148) and the fourth gear (140) form a worm drive gear arrangement.

15. The tool (100) of claim 1, the tool (100) comprising:
a power unit (200) configured to transmit energy to generate the motive force to selectively engage or disengage the tool head (115), the power unit (200), and the actuating member (170) is operable to move along the longitudinal direction to selectively disengage the tool head (115) by disengaging the compound gear (150) and the first gear (134).
